# EUROPEAN PATENT APPLICATION

(11) **EP 4 763 704 A1**
(43) Date of publication of application: **24.06.2026**
(21) Application number: 25226596.2
(22) Date of filing: 22.12.2025
(51) Int. Cl.: B64D 27/14, B64D 35/02, F02C 3/10, B64D 27/12

(54) **PROPULSION SYSTEM ARRANGEMENT FOR BLENDED WING BODY AIRCRAFT**

(30) Priority: 23.12.2024 US 202418999221
(71) Applicant: RTX Corporation, Farmington, CT 06032 (US)
(72) Inventor: MORTON, Jeffrey T., Manchester, 06040 (US); COOMBES, Melissa, Farmington, 06032 (US)
(74) Representative: Dehns

(57) **Abstract**

An aircraft assembly includes an airframe, a propulsion module (56) and a turbine engine (58). The airframe includes a body, a first wing and a second wing. The propulsion module (56) is mounted to the body. The propulsion module (56) includes a first open propulsor rotor (60). The turbine engine is configured to drive rotation of the first open propulsor rotor (60) about a propulsion module axis (64). The turbine engine (58) includes a flowpath (92), a compressor section (88), a combustor section (89), a turbine section (90) and a first rotating structure (104A,104B). The flowpath (92) extends through the compressor section (88), the combustor section (89) and the turbine section (90) from an inlet (124) into the flowpath to an exhaust from the flowpath (126). The first rotating structure (104A,104B) includes a bladed engine rotor disposed in the compressor section (88) or the turbine section (90). The first rotating structure (104A,104B) is rotatable about a rotating structure axis (106A,106B) that is offset from the propulsion module axis (64).

## Description

### BACKGROUND OF THE INVENTION

### 1. Technical Field

This invention relates generally to an aircraft and, more particularly, to a propulsion system arrangement for the aircraft.

### 2. Background Information

Various propulsion system arrangements for an aircraft are known in the art. While these known propulsion system arrangements have various benefits, there is still room in the art for improvement.

### SUMMARY OF THE INVENTION

According to an aspect of the present invention, an assembly is provided for an aircraft. This assembly includes an airframe, a propulsion module and a turbine engine. The airframe includes a body, a first wing and a second wing. The body extends longitudinally along a longitudinal centerline from a forward end of the body to an aft end of the body. The first wing and the second wing are disposed to opposing lateral sides of the body. The first wing projects spanwise out from the body to a tip of the first wing. The second wing projects spanwise out from the body to a tip of the second wing. The propulsion module is mounted to the body. The propulsion module includes a first open propulsor rotor. The turbine engine is configured to drive rotation of the first open propulsor rotor about a propulsion module axis. The turbine engine includes a flowpath, a compressor section, a combustor section, a turbine section and a first rotating structure. The flowpath extends through the compressor section, the combustor section and the turbine section from an inlet into the flowpath to an exhaust from the flowpath. The first rotating structure includes a bladed engine rotor disposed in the compressor section or the turbine section. The first rotating structure is rotatable about a rotating structure axis that is offset from the propulsion module axis.

According to another aspect of the present invention, another assembly is provided for an aircraft. This assembly includes a blended wing body airframe, a propulsion module and a turbine engine. The blended wing body airframe extends longitudinally along a longitudinal centerline from a forward end of the blended wing body airframe to an aft end of the blended wing body airframe. The propulsion module is mounted to the blended wing body airframe. The propulsion module includes a first open propulsor rotor. The turbine engine is configured to drive rotation of the first open propulsor rotor about a propulsion module axis. The turbine engine includes a flowpath, a compressor section, a combustor section and a turbine section. The flowpath extends through the compressor section, the combustor section and the turbine section from an inlet into the flowpath to an exhaust from the flowpath. A core of the turbine engine is arranged remote from the propulsion module.

According to still another aspect of the present invention, another assembly is provided for an aircraft. This assembly includes a blended wing body airframe, a propulsion module and a turbine engine. The blended wing body airframe extends longitudinally along a longitudinal centerline from a forward end of the blended wing body airframe to an aft end of the blended wing body airframe. The propulsion module is mounted to the blended wing body airframe. The propulsion module includes a first open propulsor rotor. The turbine engine includes a first compressor rotor, a first turbine rotor and a second turbine rotor. The first compressor rotor and the first turbine rotor are rotatable about a first rotational axis. The second turbine rotor is rotatable about a second rotational axis which is offset from the first rotational axis. The second turbine rotor is operationally coupled to and configured to drive rotation of the first open propulsor rotor.

Optionally, an in accordance with any of the above, the airframe may be a blended wing body airframe.

Optionally, an in accordance with any of the above, the bladed engine rotor may be a compressor rotor disposed in the compressor section. The first rotating structure may also include a turbine rotor disposed in the turbine section.

Optionally, an in accordance with any of the above, the bladed engine rotor may be a turbine rotor disposed in the turbine section. The first rotating structure may be operationally coupled to and configured to drive rotation of the first open propulsor rotor.

Optionally, an in accordance with any of the above, the rotating structure axis may be angularly offset from the propulsion module axis by an offset angle greater than zero degrees and equal to or less than forty-five degrees.

Optionally, an in accordance with any of the above, the rotating structure axis may be angularly offset from the propulsion module axis by an offset angle equal to or greater than forty-five degrees and less than or equal to ninety degrees.

Optionally, an in accordance with any of the above, the rotating structure axis may be spatially offset from the propulsion module axis.

Optionally, an in accordance with any of the above, the rotating structure axis may be parallel with the propulsion module axis.

Optionally, an in accordance with any of the above, the rotating structure axis may be non-parallel with the propulsion module axis.

Optionally, an in accordance with any of the above, the rotating structure axis may be coincident with the propulsion module axis.

Optionally, an in accordance with any of the above, the rotating structure axis may be non-coincident with the propulsion module axis.

Optionally, an in accordance with any of the above, the assembly may also include a pylon mounting the propulsion module to the body.

Optionally, an in accordance with any of the above, at least a portion of the turbine engine may be housed within the pylon.

Optionally, an in accordance with any of the above, the first open propulsor rotor may be located longitudinally forward of the pylon.

Optionally, an in accordance with any of the above, the first open propulsor rotor may be located longitudinally aft of the pylon.

Optionally, an in accordance with any of the above, the propulsion module may be located longitudinally aft of the aft end of the body.

Optionally, an in accordance with any of the above, the propulsion module may also include an open guide vane structure downstream of the first open propulsor rotor. The open guide vane structure may be configured to condition air propelled by the first open propulsor rotor.

Optionally, an in accordance with any of the above, the propulsion module may also include an open guide vane structure upstream of the first open propulsor rotor. The open guide vane structure may be configured to condition air flowing to the first open propulsor rotor.

Optionally, an in accordance with any of the above, the propulsion module may also include a second open propulsor rotor. The turbine engine may be configured to drive rotation of the second open propulsor rotor about the propulsion module axis.

Optionally, an in accordance with any of the above, at least a portion of the turbine engine may be housed within the body.

Optionally, an in accordance with any of the above, the propulsion module may be disposed above a top side of the body. At least a portion of the turbine engine may be disposed below a bottom side of the body within a housing.

Optionally, an in accordance with any of the above, the inlet into the flowpath may be located at a top side of the body.

Optionally, an in accordance with any of the above, the inlet into the flowpath may be located at a bottom side of the body.

Optionally, an in accordance with any of the above, the turbine engine may be arranged longitudinally forward of the propulsion module.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a plan view illustration of an aircraft.
FIG. 2 is a side view illustration of the aircraft.
FIG. 3 is a rear end view illustration of the aircraft.
FIG. 4 is a side schematic illustration of a propulsion system for the aircraft with a propulsion module and a turbine engine.
FIG. 5 is a side schematic illustration of a portion of the aircraft propulsion system at its propulsion module.
FIG. 6-12 are side schematic illustration of a portion of the aircraft with various other propulsion module-turbine engine arrangements for its propulsion system.
FIG. 13 is a side schematic illustration of the propulsion system with another propulsion module-turbine engine arrangement.
FIG. 14 is a side schematic illustration of a portion of the propulsion system with counter-rotating open rotors.

### DETAILED DESCRIPTION

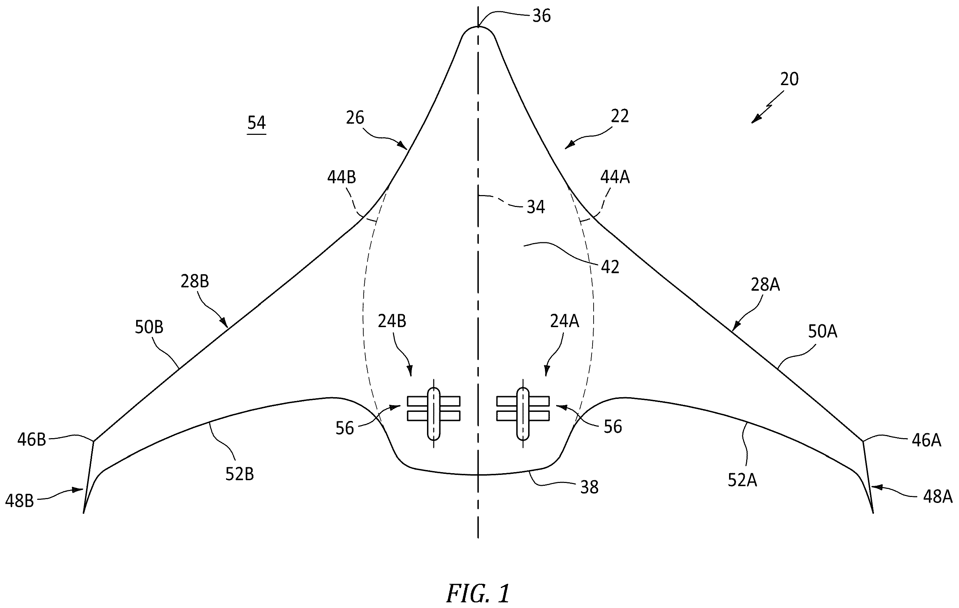

FIG. 1 illustrates a blended wing body (BWB) aircraft 20. This BWB aircraft 20 includes an airframe 22 and one or more propulsion systems 24A and 24B (generally referred to as "24"). The aircraft airframe 22 includes a body 26 (e.g., a fuselage) and one or more wings 28A and 28B (generally referred to as "28").

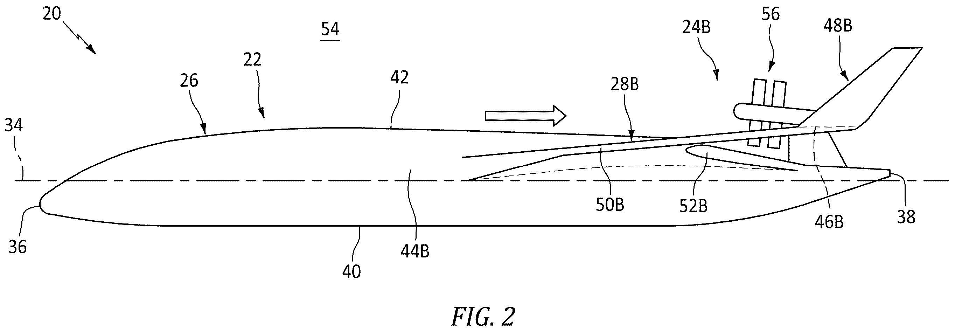

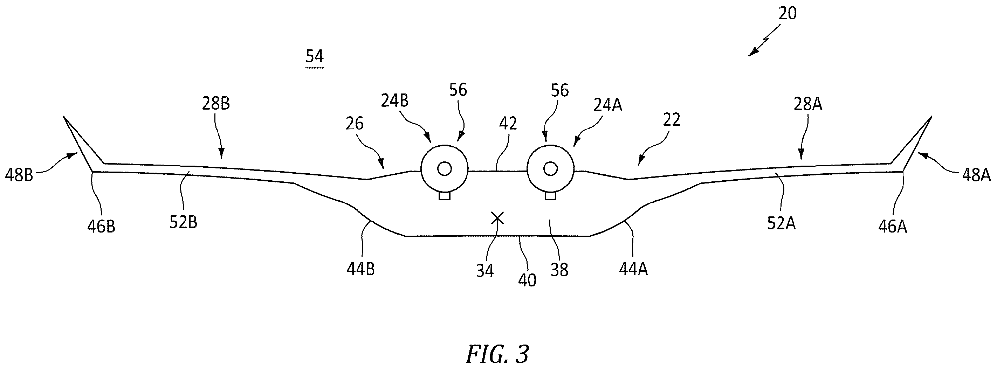

The aircraft body 26 of FIG. 1 extends longitudinally along a longitudinal centerline 34 from an upstream, forward end 36 (e.g., a tip end) of the BWB aircraft 20 and its aircraft body 26 to a downstream, aft end 38 (e.g., a tail end) of the aircraft body 26. This longitudinal centerline 34 may be a centerline axis of the BWB aircraft 20, the aircraft airframe 22 and/or the aircraft body 26. Referring to FIG. 2, the longitudinal centerline 34 may be substantially (e.g., within +/five or ten degrees) or completely parallel with a horizon line when the BWB aircraft 20 is flying in level flight. The aircraft body 26 extends vertically between and to opposing vertical bottom and top sides 40 and 42 of the aircraft body 26. The body bottom side 40 is vertically below the body top side 42 with respect to a gravitational direction when the BWB aircraft 20 is flying in level flight. Referring to FIGS. 1 and 3, the aircraft body 26 extends laterally between and to opposing lateral sides 44A and 44B (generally referred to as "44") of the aircraft body 26.

The aircraft wings 28A and 28B of FIGS. 1 and 3 are arranged to the opposing lateral sides 44A and 44B of the aircraft body 26. Each of the aircraft wings 28 is connected to (e.g., fixed to) the aircraft body 26. Each of the aircraft wings 28A, 28B projects spanwise along a span line of the respective aircraft wing 28A, 28B out from the aircraft body 26, at the respective body lateral side 44A, 44B, to a distal tip 46A, 46B of the respective aircraft wing 28A, 28B. At the wing tip 46A, 46B, the respective aircraft wing 28A, 28B may (or may not) be configured with a winglet 48A, 48B. Each of the aircraft wings 28A, 28B of FIG. 1 extends longitudinally along a mean line of the respective aircraft wing 28A, 28B from a leading edge 50A, 50B (generally referred to as "50") of the respective aircraft wing 28A, 28B to a trailing edge 52A, 52B (generally referred to as "52") of the respective aircraft wing 28A, 28B. The wing leading edge 50 of FIG. 1, at a base of the respective aircraft wing 28, is longitudinally spaced aft, downstream from the body forward end 36. The wing trailing edge 52 of FIG. 1, at the wing base, is longitudinally spaced forward, upstream from the body aft end 38. The present invention, however, is not limited to such an exemplary aircraft wing arrangement.

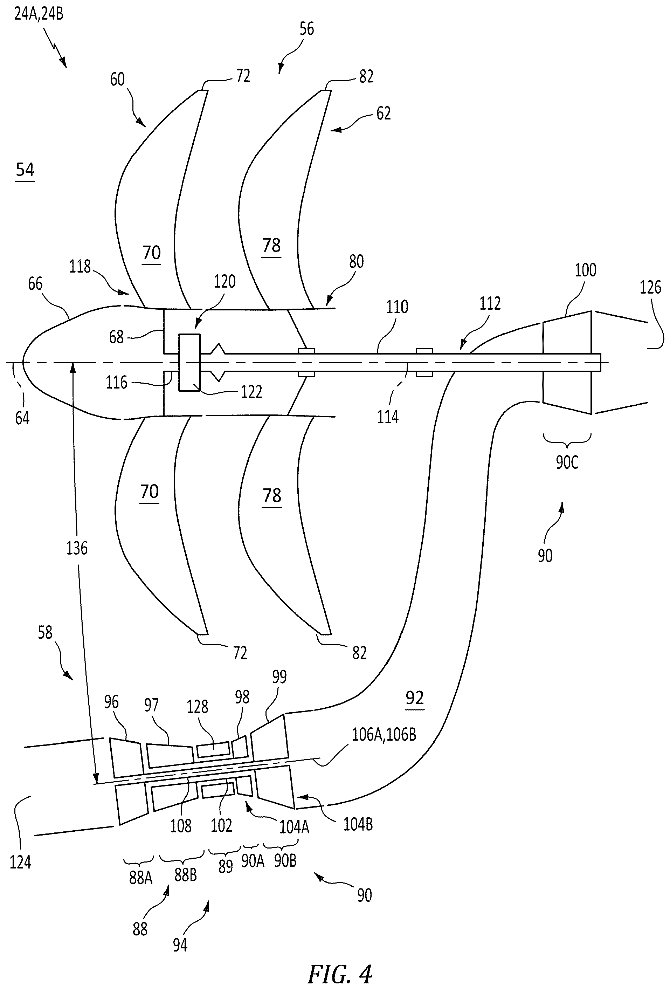

Referring to FIG. 4, each aircraft propulsion system 24 is configured as an open rotor propulsion system. The aircraft propulsion system 24 of FIG. 4, for example, is configured as a single rotor and swirl recovery vane (SRV) open rotor propulsion system. Here, the term "open" may describe a propulsion system section and/or a propulsion system component which is open to an environment 54 (e.g., an ambient environment) external to the aircraft propulsion system 24 and, more generally, the BWB aircraft 20 (see FIGS. 1-3). The aircraft propulsion system 24 of FIG. 4 includes a propulsion module 56 and a gas turbine engine 58.

The propulsion module 56 may be configured as a single rotor and swirl recovery vane (SRV) propulsion module. The propulsion module 56 of FIG. 4, for example, includes an open propulsor rotor 60 and an open guide vane structure 62 arranged axially along a propulsion module axis 64. Briefly, this propulsion module axis 64 may be a rotational axis of the propulsor rotor 60 and/or a centerline axis of one or more of the propulsion section members 60 and/or 62. The propulsion section members 60 and 62 are un-ducted and (optionally) unshrouded components of the aircraft propulsion system 24 and its propulsion module 56. In some embodiments at least the open guide vane structure 62 may be shrouded. The propulsion module 56 of FIG. 4 also includes a nose cone 66 disposed at (e.g., on, adjacent or proximate) an upstream, forward end of the propulsion module 56. This nose cone 66 may be configured as a spinner which is rotatable with the propulsor rotor 60 about the propulsion module axis 64. Alternatively, the nose cone 66 may be configured as a stationary structure of the propulsion module 56.

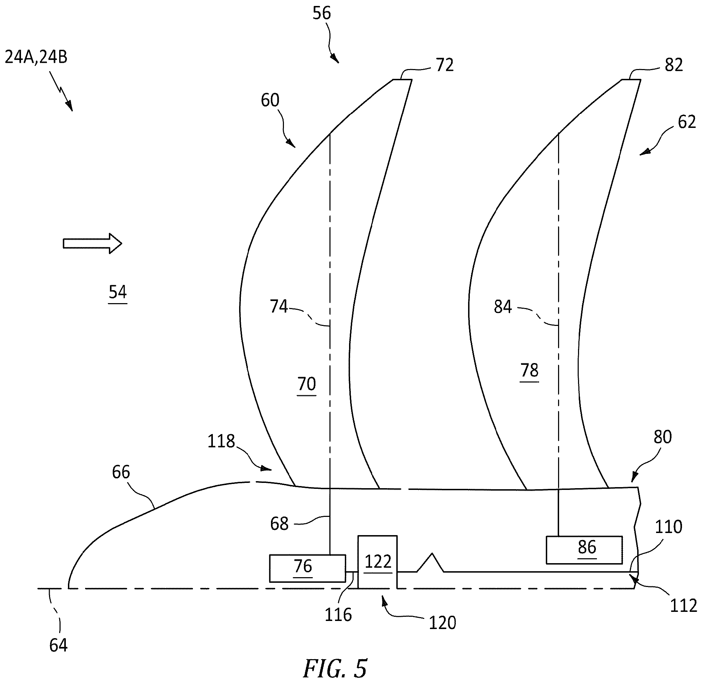

Referring to FIG. 5, the propulsor rotor 60 includes a propulsor rotor base 68 (e.g., a disk or a hub) and a plurality of open propulsor blades 70 (e.g., airfoils). The propulsor blades 70 are arranged and may be equispaced circumferentially about the rotor base 68 and the propulsion module axis 64 in an array; e.g., a circular array. Each of the propulsor blades 70 is connected to (e.g., formed integral with or otherwise attached to) the rotor base 68. Each of the propulsor blades 70 projects spanwise along a span line of the respective propulsor blade 70 (e.g., radially relative to the propulsion module axis 64) out from an exterior surface of the rotor base 68, into the external environment 54, to an unshrouded distal tip 72 of the respective propulsor blade 70. Each propulsor blade 70 is thereby configured as an un-ducted and unshrouded propulsor blade which is exposed to (e.g., disposed in) the surrounding external environment 54.

Each propulsor blade 70 may be configured to pivot about a respective blade pivot axis 74. This blade pivot axis 74 extends radially relative to the propulsion module axis 64. The blade pivot axis 74 of FIG. 5, for example, is arranged perpendicular to the propulsion module axis 64 when viewed, for example, in a longitudinal reference plane parallel to (e.g., including) the propulsion module axis 64; e.g., the plane of FIG. 5. Each propulsor blade 70 of FIG. 5 is operatively coupled with a blade actuation system 76 (schematically shown). This blade actuation system 76 is configured to pivot each propulsor blade 70 about its respective blade pivot axis 74. By pivoting each propulsor blade 70 about its blade pivot axis 74, a pitch of the respective propulsor blade 70 may be changed. Note, while the blade pivot axis 74 is shown in FIG. 5 as being perpendicular to the propulsion module axis 64, it is contemplated this blade pivot axis 74 may or may not be coincident with the propulsion module axis 64. Moreover, it is contemplated each blade pivot axis 74 may alternatively be angularly offset from the propulsion module axis 64 by an acute angle or an obtuse angle when viewed, for example, in the longitudinal reference plane. Of course, it is contemplated some or all of the propulsor blades 70 may be alternatively moved to change the propulsor blade pitch. Moreover, it is contemplated some or all of the propulsor blades 70 may alternatively be fixed pitch propulsor blades.

The guide vane structure 62 of FIG. 5 includes a plurality of open exit guide vanes 78; e.g., airfoils. The guide vanes 78 are arranged and may be equispaced circumferentially about the propulsion module axis 64 in an array; e.g., a circular array. The guide vane structure 62 and its guide vanes 78 are arranged axially next to (e.g., adjacent) the propulsor rotor 60 and its propulsor blades 70. The guide vane structure 62 and its guide vanes 78 of FIG. 5, for example, are arranged downstream of the propulsor rotor 60 and its propulsor blades 70, without (e.g., any) other propulsor rotors or guide vane structures axially therebetween to propel and/or turn the air propelled by the propulsor rotor 60 to the guide vane structure 62 for example. Each of the guide vanes 78 of FIG. 5 is coupled to a support structure of a housing 80 for the propulsion module 56; e.g., a case and/or a nacelle. This support structure may be a support frame, a case or another fixed structure of the propulsion module housing 80. Each of the guide vanes 78 projects spanwise along a span line of the respective guide vane 78 (e.g., radially relative to the propulsion module axis 64) out from an exterior surface of the propulsion module housing 80, into the external environment 54, to an unshrouded distal tip 82 of the respective guide vane 78. Each guide vane 78 is thereby configured as an un-ducted and (optionally) unshrouded guide vane which is exposed to (e.g., disposed in) the surrounding external environment 54. In some embodiments, the guide vanes 78 may include a shroud coupled to or formed with the distal tip 82. In such embodiments, the guide vanes 78 may be un-ducted and shrouded components of the propulsion module 56.

Each guide vane 78 may be configured to pivot about a respective vane pivot axis 84. This vane pivot axis 84 extends radially relative to the propulsion module axis 64. The vane pivot axis 84 of FIG. 5, for example, is arranged perpendicular to the propulsion module axis 64 when viewed, for example, in the longitudinal reference plane. Each guide vane 78 of FIG. 5 is operatively coupled with a vane actuation system 86 (schematically shown), which vane actuation system 86 may be discrete from or integrated as part of the blade actuation system 76. The vane actuation system 86 is configured to pivot each guide vane 78 about its vane pivot axis 84. By pivoting each guide vane 78 about its vane pivot axis 84, a pitch of the respective guide vane 78 may be changed. Note, while the vane pivot axis 84 is shown in FIG. 5 as being perpendicular to the propulsion module axis 64, it is contemplated this vane pivot axis 84 may or may not be coincident with the propulsion module axis 64. Moreover, it is contemplated each vane pivot axis 84 may alternatively be angularly offset from the propulsion module axis 64 by an acute angle or an obtuse angle when viewed, for example, in the longitudinal reference plane. Of course, it is contemplated some or all of the guide vanes 78 may be alternatively moved to change the guide vane pitch. Moreover, it is contemplated some or all of the guide vanes 78 may alternatively be configured as fixed pitch guide vanes.

Referring to FIG. 4, the turbine engine 58 includes a compressor section 88, a combustor section 89, a turbine section 90 and an engine flowpath 92; e.g., a core flowpath. The compressor section 88 of FIG. 4 includes a low pressure compressor (LPC) section 88A and a high pressure compressor (HPC) section 88B. The turbine section 90 of FIG. 4 includes a high pressure turbine (HPT) section 90A, an intermediate pressure turbine (IPT) section 90B and a power turbine (PT) section 90C, which PT section 90C is a low pressure turbine (LPT) section of the turbine engine 58. At least (or only) the LPC section 88A, the HPC section 88B, the combustor section 89, the HPT section 90A and the IPT section 90B collectively form a core 94 of the turbine engine 58; e.g., a gas generator.

Each of the engine sections 88A, 88B, 90A, 90B and 90C includes a respective bladed engine rotor 96-100; e.g., a ducted and/or shrouded engine rotor. Each of these engine rotors 96-100 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages along the engine flowpath 92. Each of the rotor blades is connected to the respective rotor base. Each of the rotor blades projects radially (e.g., spanwise) out from the respective rotor base into the engine flowpath 92 and to a distal tip of the respective rotor blade.

The HPC rotor 97 is coupled to and rotatable with the HPT rotor 98. The HPC rotor 97 of FIG. 4, for example, is connected to the HPT rotor 98 by a high speed shaft 102. At least (or only) the HPC rotor 97, the HPT rotor 98 and the high speed shaft 102 collectively form a high speed rotating structure 104A; e.g., a high speed spool of the turbine engine 58 and its engine core 94. This high speed rotating structure 104A of FIG. 4 and its members 97, 98 and 102 are rotatable about a high speed structure axis 106A.

The LPC rotor 96 is coupled to and rotatable with the IPT rotor 99. The LPC rotor 96 of FIG. 4, for example, is connected to the IPT rotor 99 by a low speed shaft 108. At least (or only) the LPC rotor 96, the IPT rotor 99 and the low speed shaft 108 collectively form a low speed rotating structure 104B; e.g., a low speed spool of the turbine engine 58 and its engine core 94. This low speed rotating structure 104B of FIG. 4 and its members 96, 99 and 108 are rotatable about a low speed structure axis 106B. This low speed structure axis 106B is parallel (e.g., coaxial) with the high speed structure axis 106A and a centerline axis of the engine core 94. The present invention, however, is not limited to such an exemplary coaxial engine rotating structure arrangement.

The PT rotor 100 (e.g., the LPT rotor) is connected to and rotatable with a power turbine shaft 110. At least (or only) the PT rotor 100 and the power turbine shaft 110 collectively form a power turbine (PT) rotating structure 112. This PT rotating structure 112 of FIG. 4 and its members 100 and 110 are rotatable about a power turbine (PT) structure axis 114.

The propulsor rotor 60 is connected to and rotatable with a propulsor shaft 116. At least (or only) the propulsor rotor 60 and the propulsor shaft 116 collectively form a propulsor rotating structure 118. This propulsor rotating structure 118 of FIG. 4 and its members 60 and 116 are rotatable about the propulsion module axis 64. The propulsor rotating structure 118 is coupled to the PT rotating structure 112 through a drivetrain 120. The drivetrain 120 may be configured as a geared drivetrain, where a geartrain 122 (e.g., a transmission, a speed change device, an epicyclic geartrain, etc.) is disposed between and operatively couples the propulsor rotating structure 118 and its propulsor shaft 116 to the PT rotating structure 112 and its power turbine shaft 110. With this arrangement, the propulsor rotor 60 may rotate at a different (e.g., slower) rotational speed than the PT rotating structure 112 and its PT rotor 100. However, the drivetrain 120 may alternatively be configured as a direct-drive drivetrain, where the geartrain 122 is omitted. With this arrangement, the propulsor rotor 60 and the PT rotor 100 may rotate at a common (the same) rotational speed.

The engine flowpath 92 extends through the turbine engine 58 and its engine core 94 from an airflow inlet 124 into the engine flowpath 92 to a combustion products exhaust 126 from the engine flowpath 92. More particularly, the engine flowpath 92 extends sequentially through the LPC section 88A, the HPC section 88B, the combustor section 89, the HPT section 90A, the IPT section 90B and the PT section 90C from the flowpath inlet 124 to the flowpath exhaust 126. The flowpath inlet 124 may also be an airflow inlet into the aircraft propulsion system 24 and its turbine engine 58. The flowpath exhaust 126 may also be a combustion products exhaust from the aircraft propulsion system 24 and its turbine engine 58.

During operation of the aircraft propulsion system 24 of FIG. 4, ambient air within the external environment 54 is propelled by the propulsor rotor 60 across the guide vane structure 62 in an aft, downstream direction towards the body aft end 38 (see FIGS. 1 and 2). The guide vane structure 62 and its guide vanes 78 condition (e.g., straighten out) the air propelled by the propulsor rotor 60, for example, to remove or reduce circumferential swirl. This air propelled by the propulsor rotor 60 across the guide vane structure 62 provides forward thrust. Ambient air is also directed into the turbine engine 58 and its engine flowpath 92 through its flowpath inlet 124. The air entering the engine flowpath 92 may be referred to as "core air".

The core air is compressed by the LPC rotor 96 and the HPC rotor 97 and directed into a combustion chamber 128 (e.g., an annular combustion chamber) of a combustor (e.g., an annular combustor) in the combustor section 89. Fuel is injected into the combustion chamber 128 and mixed with the compressed core air to provide a fuel-air mixture. This fuel-air mixture is ignited and combustion products thereof flow through and sequentially drive rotation of the HPT rotor 98, the IPT rotor 99 and the PT rotor 100 before being exhausted out of the aircraft propulsion system 24 and its turbine engine 58 though the flowpath exhaust 126 into the external environment 54. The rotation of the HPT rotor 98 and the IPT rotor 99 respectively drive rotation of the HPC rotor 97 and the LPC rotor 96 and, thus, compression of the core air received from the flowpath inlet 124. The rotation of the PT rotor 100 drives rotation of the propulsor rotor 60 through the drivetrain 120. The rotation of the propulsor rotor 60 propels the ambient air within the external environment 54 across the guide vane structure 62 in the aft, downstream direction. With this arrangement, the turbine engine 58 and its PT section 90C power operation of (e.g., drive rotation of) the propulsor rotor 60 during aircraft propulsion system operation.

Referring to FIG. 1, the aircraft propulsion systems 24 and their propulsion modules 56 are arranged to opposing lateral sides of the longitudinal centerline 34 and, thus, a lateral center of the BWB aircraft 20 and its aircraft airframe 22. The first aircraft propulsion system 24A of FIG. 1 and its propulsion module 56, for example, are spaced laterally from the longitudinal centerline 34 by a lateral first distance. The second aircraft propulsion system 24B of FIG. 1 and its propulsion module 56 are spaced laterally from the longitudinal centerline 34 by a lateral second distance, which second distance may be equal to the first distance. The longitudinal centerline 34 may thereby be arranged laterally midway between the aircraft propulsion systems 24 and their propulsion modules 56.

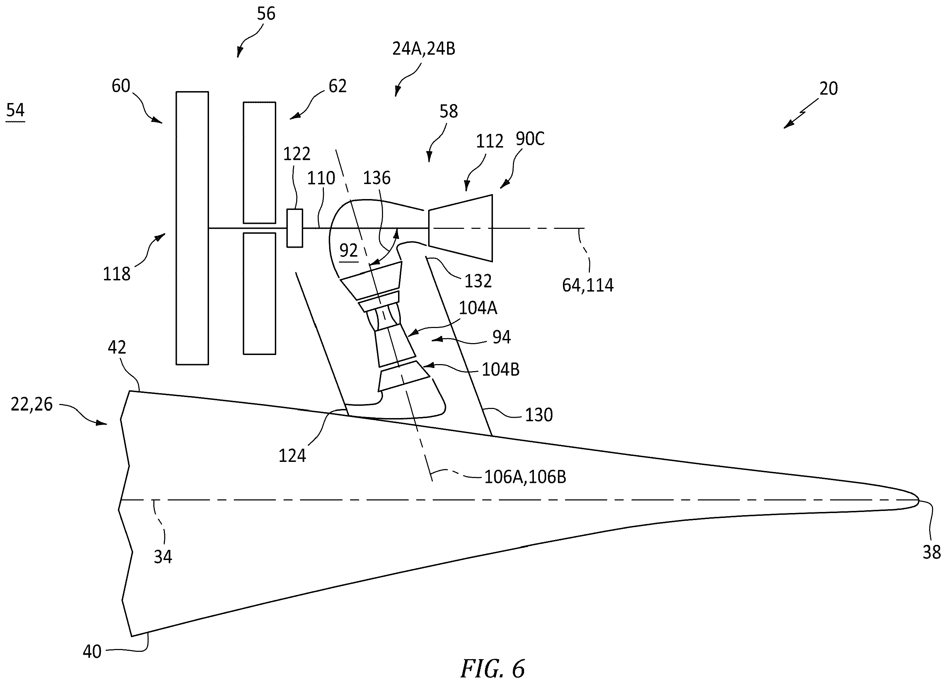

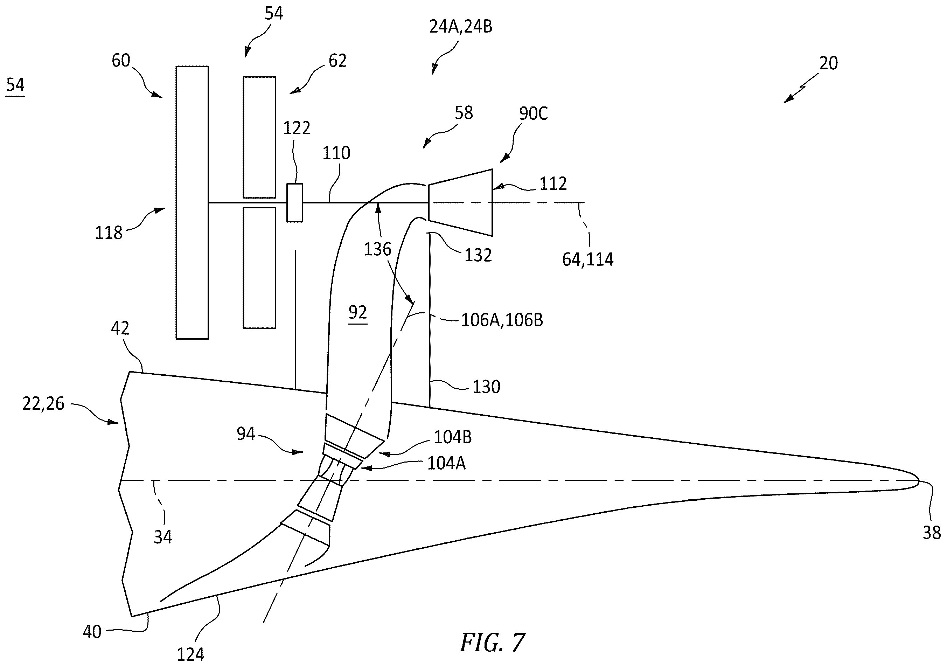

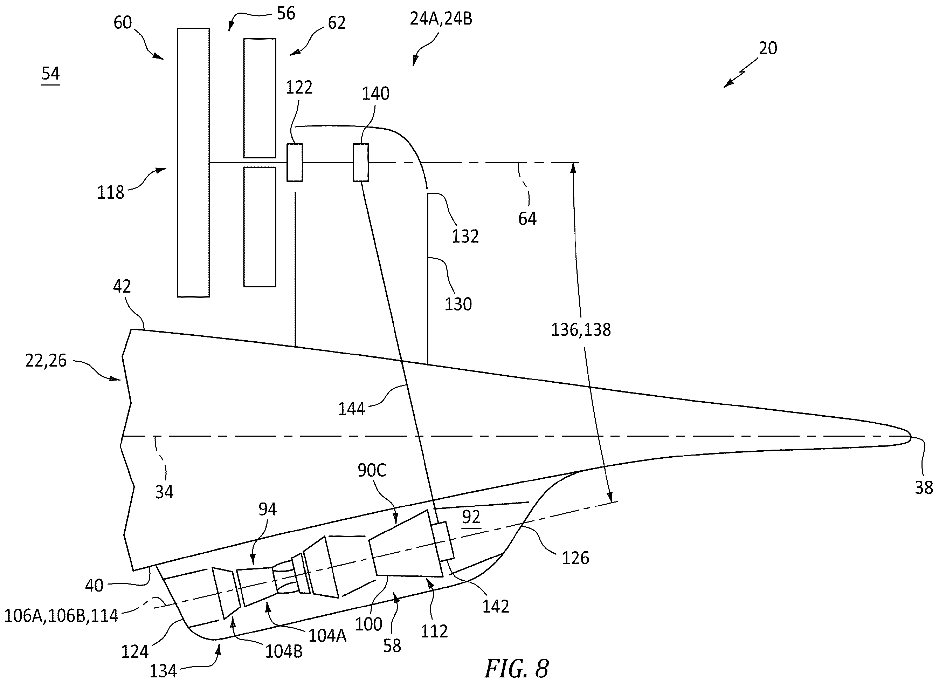

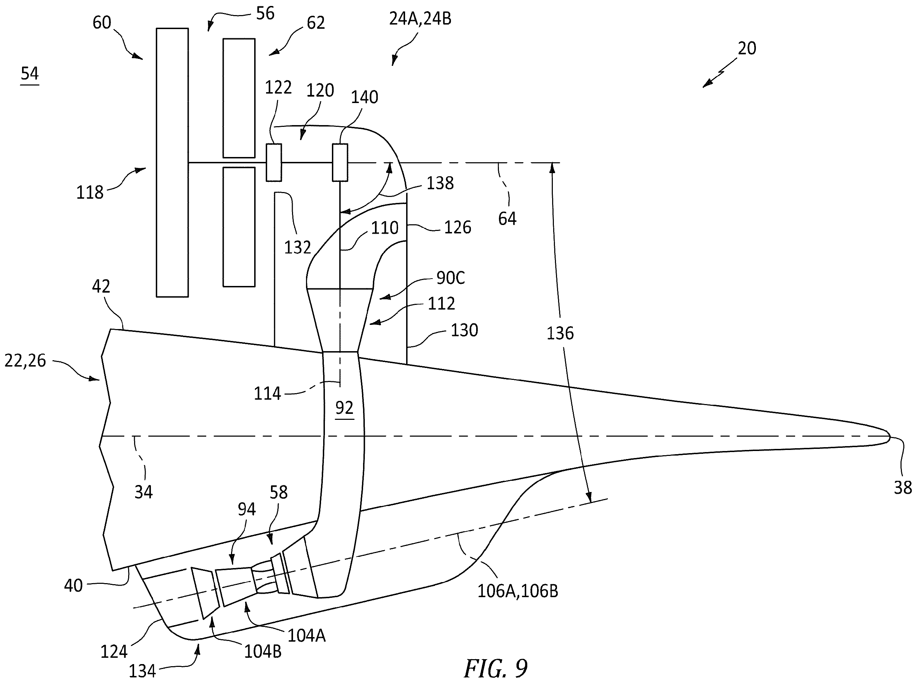

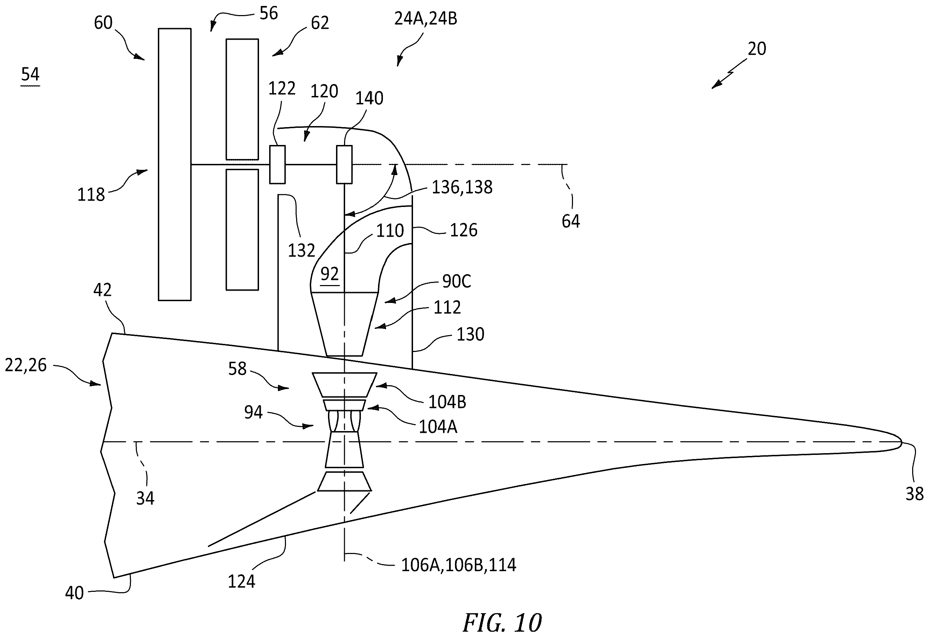

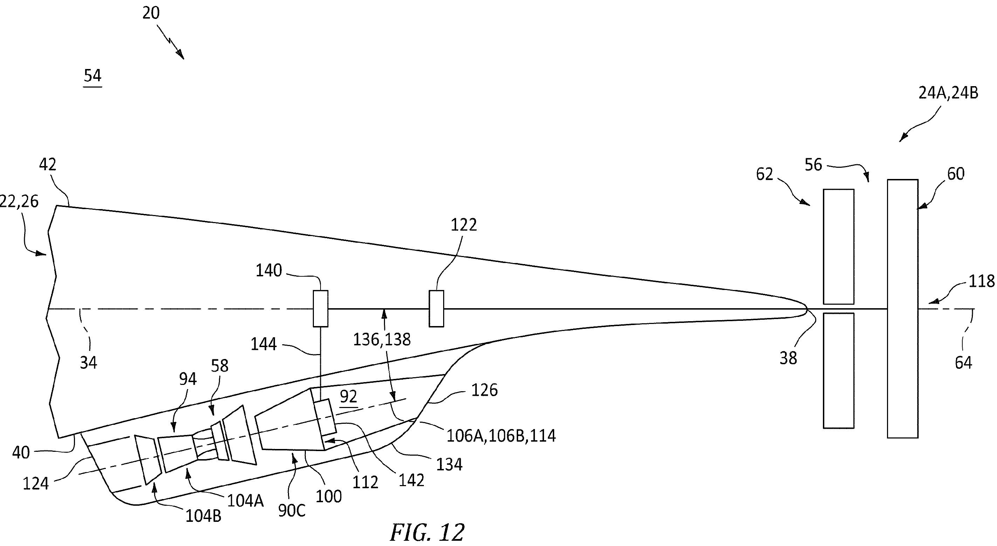

Referring to FIGS. 6-12, for each aircraft propulsion system 24, at least a portion of the turbine engine 58 may be arranged remote from the propulsion module 56 and its propulsor rotating structure 118. For example, referring FIGS. 6-11, the propulsion module 56 may be mounted to the aircraft airframe 22 and its aircraft body 26 at the body top side 42 by a pylon 130. This pylon 130 is connected to the aircraft body 26 and projects vertically out from the body top side 42 to a distal end 132 of the pylon 130. The propulsion module 56 is connected to the pylon 130 at the pylon distal end 132. The propulsion module 56 and its propulsor rotor 60 are thereby arranged vertically above, and may be spaced vertically outward from, the aircraft airframe 22 and its aircraft body 26 at the body top side 42. Alternatively, referring to FIG. 12, the propulsion module 56 and its propulsor rotor 60 may be mounted (e.g., directly) to the aircraft airframe 22 and its aircraft body 26 at the body aft end 38. The propulsion module 56 and its propulsor rotor 60 are thereby located longitudinally downstream and aft of the aircraft airframe 22 and its aircraft body 26. Referring to FIGS. 8, 9, 11 and 12, at least a portion (or an entirety) of the turbine engine 58 may be housed within a propulsion system housing 134 (e.g., a nacelle) remote from the propulsion module 56. At least the engine core 94 of FIGS. 8, 9, 11 and 12 and optionally the PT section 90C of FIGS. 8, 11 and 12, for example, is/are housed within the propulsion system housing 134. This propulsion system housing 134 is disposed outside of and vertically below the aircraft airframe 22 and its aircraft body 26 at the body bottom side 40. With the arrangement of FIGS. 8, 9 and 11, the aircraft airframe 22 and its aircraft body 26 vertically separate the propulsion system housing 134 and its housed engine member(s) 94 and/or 90C from the propulsion module 56. Alternatively, referring to FIG. 6, at least a portion (or an entirety) of the turbine engine 58 may be housed within the pylon 130. At least the engine core 94 of FIG. 6, for example, is housed within the pylon 130 vertically below the propulsion module axis 64 and the PT structure axis 114. In another example, referring to FIGS. 9 and 10, at least the PT section 90C is housed within the pylon 130 vertically below the propulsion module axis 64. In yet another example, referring to FIGS. 7 and 10, at least a portion (or an entirety) of the turbine engine 58 may be housed within the aircraft airframe 22 and its aircraft body 26. At least the engine core 94 of FIGS. 7 and 10, for example, is housed within the aircraft body 26 vertically between the body top side 42 and the body bottom side 40; e.g., within an internal engine compartment of the aircraft body 26.

By arranging at least a portion of the engine core 94 remote from the propulsion module 56, the turbine engine 58 and its engine core 94 may be packaged in otherwise unoccupied spaces of the BWB aircraft 20. For example, by housing the engine core 94 within the aircraft body 26 or the pylon 130, an overall size of external boundary surfaces of the BWB aircraft 20 may be decreased to reduce aerodynamic drag and thereby increase aircraft efficiency. In addition or alternatively, the turbine engine 58 and its engine core 94 may be packaged to facilitate easier access to the turbine engine 58 and its engine core 94 for maintenance and/or inspection. Moreover, the turbine engine 58 and its engine core 94 may be packaged to facilitate easier removal and/or installation of the turbine engine 58 and its engine core 94; e.g., the turbine engine 58 and its engine core 94 may be configured as a line replaceable unit (LRU). In addition or alternatively the flowpath inlet 124 may be arranged to receive air from the external environment 54 which has not been substantially influenced by operation of the propulsion module 56 and its propulsor rotor 60. For example, the flowpath inlet 124 of FIGS. 6-12 may be arranged to receive free-stream air from the external environment 54 or boundary layer air from the external environment 54. In particular, the flowpath inlet 124 of FIGS. 6 is arranged at the body top side 42, for example, at (or about) a leading edge of the pylon 130. The flowpath inlet 124 of FIGS. 7-12 is arranged at (or about) the body bottom side 40.

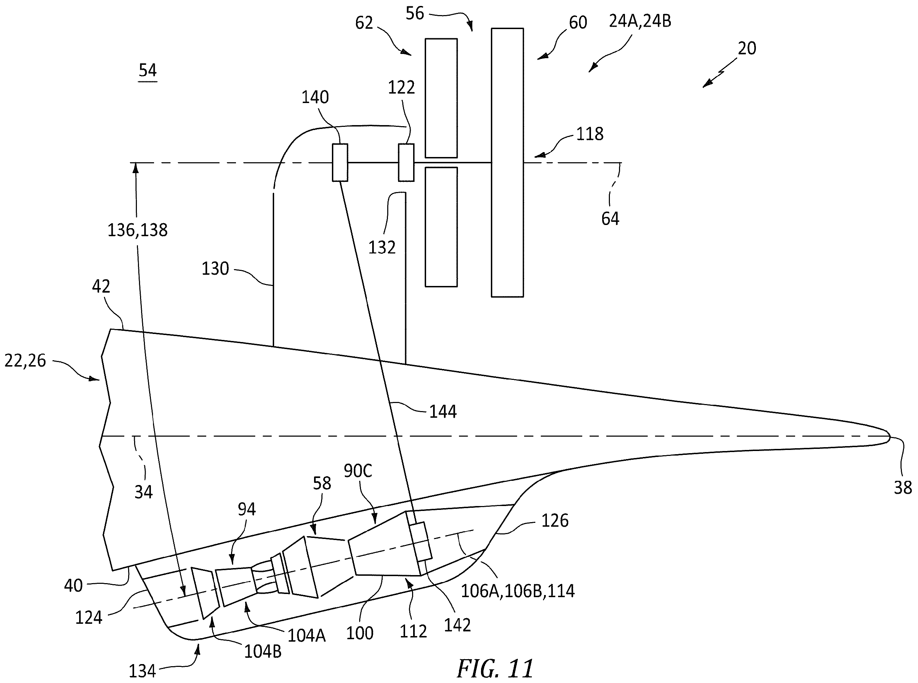

In some embodiments, referring to FIGS. 6-10, the propulsion module 56 and one or more of its members 60 and/or 62 may be arranged longitudinally upstream and forward of the pylon 130 along the longitudinal centerline 34. In other embodiments, referring to FIG. 11, the propulsion module 56 and one or more of its members 60 and/or 62 may be arranged longitudinally downstream and aft of the pylon 130 along the longitudinal centerline 34.

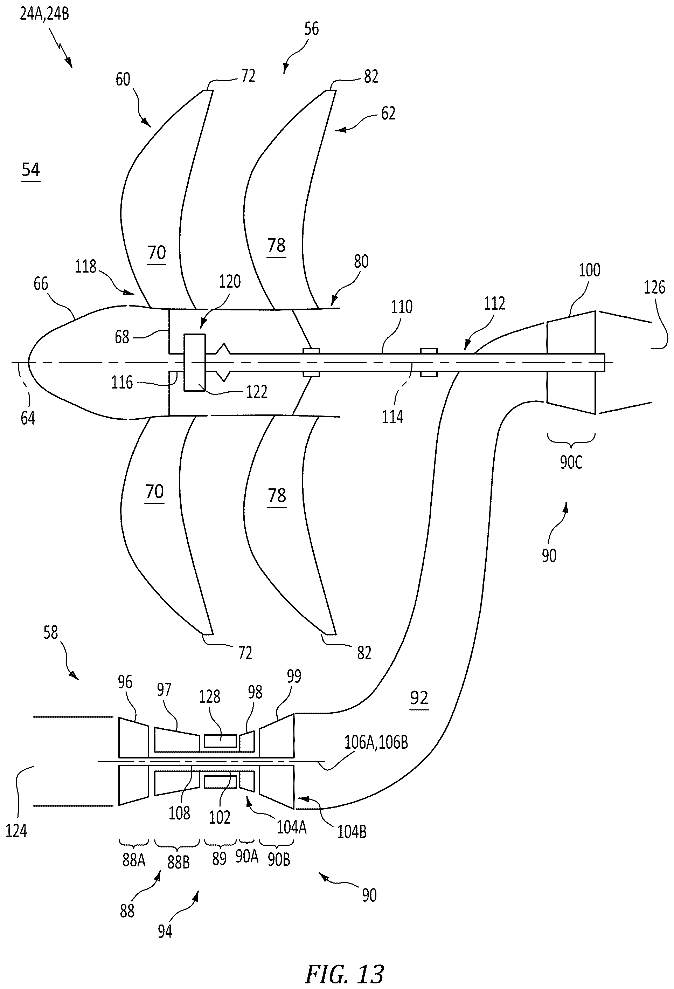

Referring to FIGS. 6-12, one or more of the core rotating structure axes 106A and 106B (generally referred to as "106") may be spatially and/or angularly offset from the propulsion module axis 64. For example, each core rotating structure axis 106 of FIGS. 6-12 is angularly offset from the propulsion module axis 64 by an offset angle 136. In some embodiments, referring to FIG. 10, the offset angle 136 may be a right angle (ninety degrees), or within plus/minus five or ten degrees thereof. In other embodiments, referring to FIGS. 6 and 7, the offset angle 136 may be equal to or greater than forty-five degrees (45°) and less than ninety degrees (90°). In still other embodiments, referring to FIGS. 8, 9, 11 and 12, the offset angle 136 may be equal to or less than forty-five degrees (45°) and greater than zero degrees (0°). Where the core rotating structure axis/axes 106 is/are angularly offset from the propulsion module axis 64, the core rotating structure axis/axes 106 may be coincident with the propulsion module axis 64 or non-coincident with the propulsion module axis 64. The present invention, however, is not limited to such exemplary arrangements. For example, referring to FIG. 13, one or more of the core rotating structure axes 106 may alternatively be parallel to the propulsion module axis 64, but spatially offset (e.g., vertically spaced) from the propulsion module axis 64.

In some embodiments, referring to FIGS. 4, 6, 7 and 13, the PT structure axis 114 may be parallel (e.g., coaxial) with the propulsion module axis 64. In other embodiments, referring to FIGS. 8-12, the PT structure axis 114 may be spatially and/or angularly offset from the propulsion module axis 64. For example, the PT structure axis 114 of FIGS. 8-12 is angularly offset from the propulsion module axis 64 by an offset angle 138. In some embodiments, referring to FIGS. 9 and 10, the offset angle 138 may be a right angle (ninety degrees), or within plus/minus five or ten degrees thereof. In other embodiments, referring to FIGS. 8, 11 and 12, the offset angle 138 may be equal to or less than forty-five degrees (45°) and greater than zero degrees (0°). In still other embodiments, the offset angle 138 may be equal to or greater than forty-five degrees (45°) and less than ninety degrees (90°). Where the PT structure axis 114 is angularly offset from the propulsion module axis 64, the PT structure axis 114 may be coincident with the propulsion module axis 64 or non-coincident with the propulsion module axis 64.

In some embodiments, referring to FIGS. 6 and 7, the power turbine shaft 110 may be coupled directly to the geartrain 122. In other embodiments, referring to FIGS. 9 and 10, the power turbine shaft 110 may be coupled to a gearbox 140 (e.g., a bevel gearbox) to couple the PT rotating structure 112 to the drivetrain 120.

In some embodiments, referring to FIGS. 6-10, the propulsor rotor 60 may be disposed longitudinally and/or axially upstream and forward of the guide vane structure 62. With this arrangement, the guide vane structure 62 may condition the air propelled by the propulsor rotor 60 as described above. In other embodiments, referring to FIGS. 11 and 12, the guide vane structure 62 may alternatively be disposed longitudinally and/or axially upstream and forward of the propulsor rotor 60. With this arrangement, the guide vane structure 62 may pre-condition the air received by the propulsor rotor 60.

In some embodiments, referring to FIGS. 8, 11 and 12, the PT rotating structure 112 and its PT rotor 100 may be operatively coupled to the gearbox 140 through one or more intermediate drivetrain members. The PT rotating structure 112 and its PT rotor 100 of FIGS. 8, 11 and 12, for example, are operatively coupled to the gearbox 140 through another gearbox 142 (e.g., a bevel gearbox) and a vertical shaft 144 (e.g., a tower shaft). Here, the second gearbox 142 couples the PT rotating structure 112 and its PT rotor 100 to the vertical shaft 144. The vertical shaft 144 couples the second gearbox 142 to the gearbox 140.

The guide vane structure 62 is described above as a fixed (e.g., non-rotatable) guide vane structure. It is contemplated, however, the guide vane structure 62 may alternatively be selectively rotatable about the propulsion module axis 64. With such an arrangement, each aircraft propulsion system 24 may be configured as an open rotor propulsion system with a swirl recovery blade (SRB) open rotor architecture. More particularly, each aircraft propulsion system 24 may operate as: (A) a counter-rotating open rotor (CROR) propulsion system during a dual rotor mode of operation (e.g., when both the propulsor rotor 60 and the structure 62 are counter-rotating); and (B) a single open rotor and swirl recovery vane (SRV) propulsion system during a single rotor mode of operation (e.g., when the propulsor rotor 60 is rotating and the structure 62 is rotationally fixed).

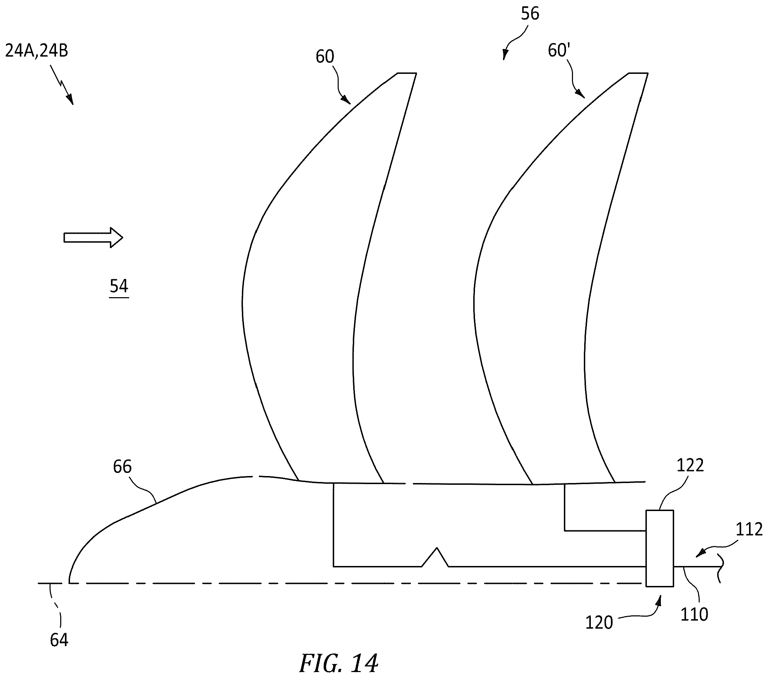

In some embodiments, referring to FIGS. 4-13, the propulsion module 56 may include the single propulsor rotor 60 and the single guide vane structure 62. In other embodiments, referring to FIG. 14, the propulsion module 56 may omit the guide vane structure and be configured with another open propulsor rotor 60' like the propulsor rotor 60. Each of these propulsor rotors 60 and 60' may be operatively coupled to and rotatably driven by the turbine engine 58 and its PT rotor 100 (e.g., see FIG. 4). However, the propulsor rotors 60 and 60' may be rotationally driven in opposing rotational directions about the propulsion module axis 64 to configure the propulsion module 56 as a counter-rotating open rotor (CROR) propulsion module. In still other embodiments, it is contemplated the propulsion module may omit the guide vane structure and just include the single propulsor rotor. The propulsion module may thereby be configured as a single rotor (SR) propulsion module.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly for an aircraft, comprising:
an airframe including a body, a first wing and a second wing, the body extending longitudinally along a longitudinal centerline from a forward end of the body to an aft end of the body, the first wing and the second wing disposed to opposing lateral sides of the body, the first wing projecting spanwise out from the body to a tip of the first wing, and the second wing projecting spanwise out from the body to a tip of the second wing;
a propulsion module mounted to the body, the propulsion module comprising a first open propulsor rotor; and
a turbine engine configured to drive rotation of the first open propulsor rotor about a propulsion module axis, the turbine engine including a flowpath, a compressor section, a combustor section, a turbine section and a first rotating structure, the flowpath extending through the compressor section, the combustor section and the turbine section from an inlet into the flowpath to an exhaust from the flowpath, the first rotating structure comprising a bladed engine rotor disposed in the compressor section or the turbine section, and the first rotating structure rotatable about a rotating structure axis that is offset from the propulsion module axis.

2. The assembly of claim 1, wherein the airframe is a blended wing body airframe.

3. The assembly of claim 1 or 2, wherein the rotating structure axis is angularly offset from the propulsion module axis by an offset angle greater than zero degrees and equal to or less than forty-five degrees.

4. The assembly of claim 1 or 2, wherein the rotating structure axis is angularly offset from the propulsion module axis by an offset angle equal to or greater than forty-five degrees and less than or equal to ninety degrees.

5. The assembly of any preceding claim, wherein the rotating structure axis is spatially offset from the propulsion module axis.

6. The assembly of any preceding claim, further comprising a pylon mounting the propulsion module to the body.

7. The assembly of claim 6, wherein at least a portion of the turbine engine is housed within the pylon.

8. The assembly of claim 6 or 7, wherein:
the first open propulsor rotor is located longitudinally forward of the pylon; or
the first open propulsor rotor is located longitudinally aft of the pylon.

9. The assembly of any preceding claim, wherein the propulsion module is located longitudinally aft of the aft end of the body.

10. The assembly of any preceding claim, wherein:
the propulsion module further includes an open guide vane structure downstream of the first open propulsor rotor, and the open guide vane structure is configured to condition air propelled by the first open propulsor rotor; or
the propulsion module further includes an open guide vane structure upstream of the first open propulsor rotor, and the open guide vane structure is configured to condition air flowing to the first open propulsor rotor.

11. The assembly of any preceding claim, wherein:
the propulsion module further includes a second open propulsor rotor; and
the turbine engine is configured to drive rotation of the second open propulsor rotor about the propulsion module axis.

12. The assembly of any preceding claim, wherein:
at least a portion of the turbine engine is housed within the body.

13. The assembly of any preceding claim, wherein:
the propulsion module is disposed above a top side of the body, at least a portion of the turbine engine is disposed below a bottom side of the body within a housing.

14. The assembly of any preceding claim, wherein:
the inlet into the flowpath is located at a top side of the body; or
the inlet into the flowpath is located at a bottom side of the body.

15. The assembly of any preceding claim, wherein the turbine engine is arranged longitudinally forward of the propulsion module.
